Europäisches Patentamt

European Patent Office

Office européen des brevets

(11) Veröffentlichungsnummer: **0 529 425 B1**

## EUROPÄISCHE PATENTSCHRIFT

(45) Veröffentlichungstag der Patentschrift: **28.06.95**

(21) Anmeldenummer: **92113797.2**

(22) Anmeldetag: **13.08.92**

(51) Int. Cl.⁶: **C09D 7/06**

(54) Verwendung von kationischen Acrylatcopolymerisaten als Additive für pigmentierte Harzmassen auf der Basis von ungesättigten Polyesterharzen.

(30) Priorität: **23.08.91 AT 1653/91**

(43) Veröffentlichungstag der Anmeldung:
**03.03.93 Patentblatt 93/09**

(45) Bekanntmachung des Hinweises auf die Patenterteilung:
**28.06.95 Patentblatt 95/26**

(84) Benannte Vertragsstaaten:
**CH DE DK IT LI**

(56) Entgegenhaltungen:
**AT-B- 392 649**

(73) Patentinhaber: **Vianova Kunstharz Aktiengesellschaft**
**Bundesstrasse 175**
**A-8402 Werndorf (AT)**

(72) Erfinder: **Kriessmann, Ingo, Dr.**
**Hilmteichstrasse 75**
**A-8010 Graz (AT)**
Erfinder: **Rauch-Puntigam, Harald Prof. Dr.**
**Hochsteingasse 21**
**A-8010 Graz (AT)**
Erfinder: **Morre, Peter**
**Papiermühlgasse 21**
**A-8020 Graz (AT)**

EP 0 529 425 B1

**Beschreibung**

Die Erfindung betrifft die Verwendung von kationischen Acrylatcopolymerisaten als Additive für pigmentierte Harzmassen auf der Basis von ungesättigten Polyesterharzen (UP-Harzen) zur Entlüftung und Verbesserung der Verlaufseigenschaften.

Pigmentierte UP-Harzmassen werden in großem Umfang als Spachtelkitt- oder Spritzkittmassen eingesetzt. Die Herstellung dieser viskosen Produkte erfolgt üblicherweise in Knetern oder Mischern, wobei größere Luftmengen vom Material eingeschlossen werden. Dadurch wird einerseits die Viskosität weiter erhöht, andererseits die Verarbeitung des Materials erschwert. Bei Spritzkitten wird auch während der Applikation Luft eingebracht, die aus dem Film vor dessen Gelierung entweichen muß, um störungsfreie Oberflächen zu erhalten.

Gemäß der derzeitigen Praxis wird die Entlüftung durch Zugabe von Verdünnungsmitteln, insbesonders von Styrol, verbessert. Durch diese Maßnahme wird jedoch die Schleifbarkeit der gehärteten Kittmassen wesentlich verschlechtert.

Es wurde nun gefunden, daß man durch die Verwendung von kationischen Acrylatcopolymerisaten als Additive für höherviskose, pigmentierte UP-Harzmassen, insbesonders für Kittmassen, eine wesentlich bessere Entlüftung, d. h. eine raschere Entfernung der von der Masse vor oder während der Verarbeitung eingeschlossenen Luft und damit eine Verbesserung der Verlaufseigenschaften erreicht.

Die Erfindung betrifft demgemäß die Verwendung von kationischen Acrylatcopolymerisaten, welche als Monomere

(A) 5 bis 40 Gew.-% sekundäre oder tertiäre Aminogruppen aufweisende Acrylmonomere,

(B) 5 bis 50 Gew.-% Monoester der (Meth)acrylsäure mit Diolen, deren Alkylenreste 2 bis 6 C-Atome oder deren Oxyalkylenreste insgesamt 4 bis 12 C-Atome aufweisen,

(C) 10 bis 90 Gew.-% (Meth)acrylsäurealkylester, deren Alkylreste 1 bis 12 C-Atome aufweisen, und gegebenenfalls

(D) bis zu 30 Gew.-% Styrol

enthalten, wobei die Summe der Prozentzahlen der Komponenten (A) bis (D) 100 ergeben muß, und welche eine Aminzahl von 15 bis 150 mg KOH/g, vorzugsweise von 30 bis 120 mg KOH/g, und eine Hydroxylzahl von 15 bis 250 mg KOH/g, vorzugsweise von 20 bis 200 mg KOH/g, aufweisen, als Additive für höherviskose, pigmentierte Harzmassen auf der Basis von ungesättigten Polyesterharzen, insbesonders für Kittmassen auf der Basis von ungesättigten Polyesterharzen, in einer Menge von 1,0 bis 5,0 Gew.-%, vorzugsweise von 2,0 bis 3,5 Gew.-%, berechnet auf Feststoff und bezogen auf den polymerisierbaren Anteil des ungesättigten Polyesterharzes, zur Entlüftung und Verbesserung der Verlaufseigenschaften.

Produkte der anspruchsgemäßen Zusammensetzung werden in der AT-PS 392 649 als Additive für kationische, wäßrige Lacksysteme beschrieben. Es war jedoch überraschend und keinesfalls vorhersehbar, daß derartige Acrylatcopolymerisate in UP-Harzmassen als Entlüftungsmittel wirksam sind.

Die Acrylatcopolymerisate mit der im Patentanspruch angegebenen Zusammensetzung werden in üblicher Weise durch Lösungspolymerisation in organischen Lösemitteln, wie in Alkoholen, Glykolmono- oder -diethern, Estern, Ketonen, etc. hergestellt. Es können auch Gemische dieser Lösemittel verwendet werden.

Die Acrylatcopolymerisate werden durch folgende Kennwerte charakterisiert:

Aminzahl: 15 bis 150 mg KOH/g, vorzugsweise 30 bis 120 mg KOH/g,

Hydroxylzahl: 15 bis 250 mg KOH/g, vorzugsweise 20 bis 200 mg KOH/g,

Die eingesetzten basischen Acrylmonomere (A) weisen sekundäre oder tertiäre Aminogruppen auf. Eine bevorzugte Gruppe dieser Monomere sind die Mono- oder Dialkylaminoalkyl(meth)acrylat` insbesonders N,N-Dimethyl-, N,N-Diethyl und N.N-Dipropyl-aminoethyl(meth)acrylat oder N-tert.-Butylaminoethyl(meth)-acrylat.

Die Einführung von sekundären oder tertiären Aminogruppen kann auch durch die nachträgliche Umsetzung eines Glycidylmethacrylat enthaltenden Copolymerisats mit primären oder vorzugsweise sekundären Alkylaminen und/oder Alkanolaminen erfolgen.

Die übrigen in den Acrylatcopolymerisaten enthaltenen Monomere sind durch die Erfindungsdefinition und durch die Ausführungsbeispiele beschrieben.

Bei den für die Herstellung der höherviskosen, pigmentierten UP-Harzmassen benötigten ungesättigten Polyesterharzen handelt es sich um allgemein zugängliche Handelsprodukte.

Wie erwähnt, eignen sich die kationischen Acrylcopolymerisate besonders für den Einsatz in UP-Kittmassen, die durch Spachtel- oder Spritzauftrag appliziert werden. In der erfindungsgemäßen Verwendung werden sie in einer Menge von 1,0 bis 5`0 Gew.-%, vorzugsweise von 2.0 bis 3,5 Gew.-%, berechnet auf Feststoff und bezogen auf den polymerisierbaren Anteil des ungesättigten Polyesterharzes, zugesetzt.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

## 1.1. Herstellung der Additive (1) bis (11) unter Verwendung von Alkylaminoethyl(meth)acrylatmonomeren

Die Herstellung der Additive erfolgt in der nachstehend angegebenen Weise. Die Mengen der eingesetzten Rohstoffe, sowie die Kennwerte der Produkte, sind in der Tabelle 1 zusammengefaßt.

Teil I wird in das Reaktionsgefäß gefüllt und auf 85 °C erhitzt. Teil II und Teil III werden innerhalb von 5 Stunden bei 85 bis 90 °C gleichmäßig zugegeben. Nach Beendigung der Zugaben wird 2 Stunden bei 90 °C gehalten und das Polymerisationsende durch Festkörperbestimmungen kontrolliert.

## Tabelle 1

| Additiv | (1) | (2) | (3) | (4) | (5) | (6) | (7) | (8) | (9) | (10) | (11) |
|---|---|---|---|---|---|---|---|---|---|---|---|
| **Teil I (Lösungsmittel)** | | | | | | | | | | | |
| Methoxypropanol | 33 | 33 | 33 | 33 | 33 | 33 | 33 | 33 | 33 | 33 | 33 |
| Ethylenglykolmonobutylether | | | | | | | | | | | |
| **Teil II (Monomerenmischung)** | | | | | | | | | | | |
| N,N-Dimethylaminoethyl-methacrylat | 15 | 25 | | 15 | 30 | 25 | 40 | | 10 | | 25 |
| N-tert.-Butylaminoethyl-methacrylat | | | 30 | | | | | | | 30 | |
| N,N-Dimethylaminoethyl-acrylat | | | | | | | | 20 | | | |
| Hydroxyethylmethacrylat | 27 | 20 | | | | 22 | | 25 | | 37 | 21 |
| Tripropylenglykolmono-methacrylat | | | | | 22 | | | | 25 | | |
| Hydroxyethylacrylat | | | 30 | | | | | | | | |
| 4-Hydroxybutylacrylat | | | | | | | 15 | | | | |
| 2-Hydroxypropylmethacrylat | | | | 18 | | | | | | | 25 |
| n-Butylacrylat | 58 | 25 | 40 | | 35 | 39 | | 43 | 20 | 33 | 29 |
| 2-Ethylhexylacrylat | | 25 | | 37 | | | 45 | | 38 | | |
| Methylmethacrylat | | | | 30 | 13 | 14 | | 12 | 7 | | |
| Styrol | | 5 | | | | | | | | | |
| **Teil III (Katalysatorlösung)** | | | | | | | | | | | |
| Methoxypropylacetat | 10 | 10 | 10 | 10 | 10 | 10 | 10 | 10 | 10 | 10 | 10 |
| Ethylenglykolmonobutylether | | | | | | | | | | | |
| Azobisisobutyronitril | 2 | 2 | 2 | 2 | 2 | 2 | 2 | 2 | 2 | 2 | 2 |
| **KENNWERTE** | | | | | | | | | | | |
| Festkörpergehalt, % | 70 | 70 | 70 | 70 | 70 | 70 | 70 | 70 | 70 | 70 | 70 |
| Aminzahl mg KOH/g | 54 | 90 | 91 | 45 | 107 | 76 | 143 | 78 | 36 | 91 | 89 |
| Hydroxylzahl mg KOH/g | 116 | 86 | 145 | 70 | 106 | 95 | 58 | 108 | 115 | 159 | 97 |

### 1.2. Herstellung des Additivs (12) durch Umsetzung von Glycidylgruppen enthaltenden Copolymerisaten mit sekundären Alkylaminen bzw. Alkanolaminen

Das Glycidylgruppen enthaltende Copolymerisat wird analog den Additiven (1) bis (11) hergestellt. Bei 80°C erfolgt innerhalb von 30 Minuten die Zugabe der Aminlösung (Teil III a). Die Temperatur wird auf 100°C gesteigert und zur Vervollständigung der Reaktion weitere 90 Minuten gehalten.

Der Ansatz weist folgende Zusammensetzung auf:

Tabelle 2

| ADDITIV | (12) |
|---|---|
| Teil I | |
| Methoxypropanol | 23 |
| Teil II | |
| Butylacrylat | 33 |
| Glycidylmethacrylat | 20 |
| Hydroxyethylacrylat | 20 |
| Styrol | 9 |
| Teil III | |
| Azobisisobutyronitril | 2 |
| Methoxypropanol | 10 |
| Teil III a | |
| Methoxypropanol | 10 |
| Diisopropanolamin | -- |
| Diisobutylamin | 18 |
| KENNWERTE | |
| Festkörpergehalt, % | 70 |
| Aminzahl, mg KOH/g | 79 |
| Hydroxylzahl, mg KOH/g | 97 |

### 2. Prüfung der erfindungsgemäß verwendeten Additive (1) bis (12) in UP-Harzmassen

Gemäß der nachfolgenden Rezeptur wird ein UP-Spachtelkitt hergestellt:

| | |
|---|---|
| 32,0 Gew.-Tle | UP-Harz, 65%ig in Styrol (siehe später) |
| 3,0 Gew.-Tle | Styrol |
| 1,0 Gew.-Tle | Kolloidale Kieselsäure |
| 2,0 Gew.-Tle | Titandioxid-Pigment |
| 10,0 Gew.-Tle | Bariumsulfat-Füllstoff |
| 52,0 Gew.-Tle | Talkum-Füllstoff |
| 100,0 2,0 Gew.-Tle | p-tert.-Butylperoxidpaste (50%ig) |

Neben diesem Ansatz als Blindprobe werden Kitte gefertigt, die 1,5 Gew.-% bzw, 3 Gew.-% der Additive (1) bis (12) enthalten. Die Gew.-% beziehen sich auf den Feststoff im Additiv und die Menge UP-Harz + Styrol. Die Herstellung erfolgt in einem üblichen Kneter oder Mischer. Das Produkt stellt eine hochviskose, spachtelbare Masse dar.

Als UP-Harz wird ein handelsübliches, vorbeschleunigtes ungesättigtes Polyesterharz, 65%ig in Styrol, eingesetzt, z. B. VIAPAL UP 282 B, VIANOVA KUNSTHARZ AG, AT. Das Produkt hat eine dynamische Viskosität von 560 bis 840 mPa.s/20°C und es wird als Alleinbindemittel für rasch schleifbare, elastische Fahrzeug-Spachtelkitte empfohlen.

Die Prüfung der Kitte erfolgt durch eine Verlaufprobe, wobei jeweils 20 g der Kittmasse unmittelbar nach dem gründlichen Einmischen der Peroxidpaste in gleicher Weise auf eine Glasplatte gegossen werden. Nach Aushärtung bei 20°C wird der Durchmesser der mehr oder weniger verlaufenen Kittmasse gemessen und mit der Blindprobe verglichen. Es ergaben sich die in Tabelle 3 zusammengefaßten Werte für den Durchmesser in cm. Für den Ansatz ohne Additiv wurde ein Wert von 2,4 cm gefunden.

Tabelle 3

| Additiv | Additivzusatz | |
|---|---|---|
| | 1,5 Gew.-% | 3.0 Gew.-% |
| 1 | 4,2 | 5,7 |
| 2 | 5,0 | 5,9 |
| 3 | 3,8 | 4,9 |
| 4 | 4,5 | 6,2 |
| 5 | 4,5 | 5,3 |
| 6 | 4,0 | 5,0 |
| 7 | 4,8 | 6,2 |
| 8 | 3,7 | 5,1 |
| 9 | 5,2 | 6,5 |
| 10 | 4,4 | 6,0 |
| 11 | 4,8 | 6,4 |
| 12 | 3,9 | 5,7 |

Eine höhere Dosierung der Additive bringt keine weitere signifikante Verbesserung des Verlaufs.

Bei der Verwendung als Spritzkitt werden die Ansätze mit einem Lösungsmittelgemisch aus Styrol, Estern und Ketonen auf die Applikationsviskosität verdünnt. Im Vergleich zum Ansatz ohne Additiv kann die Menge des Verdünnungsmittels um bis zu 50 Gew.-% vermindert werden.

**Patentansprüche**

1. Verwendung von kationischen Acrylatcopolymerisaten, welche als Monomere
   (A) 5 bis 40 Gew.-% sekundäre oder tertiäre Aminogruppen aufweisende Acrylmonomere,
   (B) 5 bis 50 Gew.-% Monoester der (Meth)acrylsäure mit Diolen, deren Alkylenreste 2 bis 6 C-Atome oder deren Oxyalkylenreste insgesamt 4 bis 12 C-Atome aufweisen,
   (C) 10 bis 90 Gew.-% (Meth)acrylsäurealkylester, deren Alkylreste 1 bis 12 C-Atome aufweisen, und gegebenenfalls
   (D) bis zu 30 Gew.-% Styrol
   enthalten, wobei die Summe der Prozentzahlen der Komponenten (A) bis (D) 100 ergeben muß, und welche eine Aminzahl von 15 bis 150 mg KOH/g, vorzugsweise von 30 bis 120 mg KOH/g, und eine Hydroxylzahl von 15 bis 250 mg KOH/g, vorzugsweise von 20 bis 200 mg KOH/g, aufweisen, als Additive für höherviskose, pigmentierte Harzmassen auf der Basis von ungesättigten Polyesterharzen, insbesondere für Kittmassen auf der Basis von ungesättigten Polyesterharzen, in einer Menge von 1,0 bis 5,0 Gew.-%, vorzugsweise von 2,0 bis 3,5 Gew.-%, berechnet auf Feststoff und bezogen auf den polymerisierbaren Anteil des ungesättigten Polyesterharzes, zur Entlüftung und Verbesserung der Verlaufseigenschaften.

**Claims**

1. Use of cationic acrylate copolymers which comprise as monomers
   (A) from 5 to 40% by weight of acrylic monomers which contain secondary or tertiary amino groups,
   (B) from 5 to 50% by weight of monoesters of (meth)acrylic acid with diols whose alkylene radicals contain 2 to 6 carbon atoms or whose oxyalkylene radicals contain a total of 4 to 12 carbon atoms,
   (C) from 10 to 90% by weight of alkyl (meth)acrylates whose alkyl radicals contain 1 to 12 carbon atoms, and if desired

5

(D) up to 30% by weight of styrene,

the sum of the percentages of components (A) to (D) necessarily being 100, and which have an amine number of from 15 to 150 mg of KOH/g, preferably from 30 to 120 mg of KOH/g, and a hydroxyl number of from 15 to 250 mg of KOH/g, preferably from 20 to 200 mg of KOH/g, as additives for pigmented resin compositions of relatively high viscosity based on unsaturated polyester resins, and in particular for putty compositions based on unsaturated polyester resins, in a quantity of from 1.0 to 5.0% by weight, preferably from 2.0 to 3.5% by weight, calculated on the basis of solids content and relative to the polymerizable components of the unsaturated polyester resin, for deaeration and improvement of the flow properties.

**Revendications**

1. Utilisation de copolymères acryliques cationiques qui en tant que monomères contiennent

   (A) 5 à 40 % en poids de monomères acryliques comportant des groupes amino secondaire ou tertiaire,

   (B) 5 à 50 % en poids de monoesters de l'acide (méth)acrylique avec des diols, dont les radicaux alkyle présentent 2 à 6 atomes C ou dont les radicaux oxyalkyliques présentent au total 4 à 12 atomes C,

   (C) 10 à 90 % en poids d'alkylesters de l'acide (méth)acrylique dont les radicaux alkyles présentent 1 à 12 atomes C, et éventuellement

   (D) jusqu'à 30 % en poids de styrène

   la somme des pourcentages des composants (A) jusqu'à (D) devant donner 100, et un indice d'amine de 15 à 150 mg KOH/g, de préférence de 30 à 120 mg KOH/g, et un indice hydroxyle de 15 à 250 mg KOH/g, de préférence de 20 à 200 mg KOH/g, comme additifs pour des compositions de résines pigmentées à haute viscosité à base de résines de polyester insaturé, en particulier pour des mastics à base de résine de polyester insaturé, dans une quantité de 1,0 à 5,0 % en poids, de préférence de 2,0 à 3,5 % en poids, calculée sur la matière solide et rapportée à la partie polymérisable de la résine polyester insaturé pour l'aérage et l'amélioration des propriétés d'écoulement.